# EUROPEAN PATENT APPLICATION

(11) **EP 4 681 903 A1**
(43) Date of publication of application: **21.01.2026**
(21) Application number: 24189660.4
(22) Date of filing: 19.07.2024
(51) Int. Cl.: B29C 48/05, B29C 48/10, B29C 48/08, B29C 48/92, C08L 67/02, B29C 48/88, B29C 48/405, B29C 48/39, B29B 9/06, B29C 48/04

(54) **METHOD TO OBTAIN A BIODEGRADABLE FILM FROM BIODEGRADABLE POLYLACTIDE WITH THE ADDITION OF A PLASTICISER**

(71) Applicant: Grupa Azoty Zaklady Azotowe Kedzierzyn S.A., 47-220 Kedzierzyn Kozle (PL); Zachodniopomorski Uniwersytet Technologiczny w Szczecinie, 70-310 Szczecin (PL)
(72) Inventor: DOROSZ, Urszula, 47-208 Wi kszyce (PL); CZOGALA, Joanna, 47-244 Lubieszów (PL); STEFANOWSKA, Karolina, 42-600 Tarnowskie Góry (PL); CICHON, Aleksandra, 47-208 Wi kszyce (PL); BARTKOWIAK, Artur, 71-667 Szczecin (PL); ZDANOWICZ, Magdalena, 66-500 Strzelce Kraje skie (PL); JEDRA, Filip, 72-006 Mierzyn (PL)
(74) Representative: Marek, Joanna

(57) **Abstract**

A method to produce a biodegradable film based on a biodegradable polymer of polylactide (PLA) with a plasticizer, characterised in that in the first stage of preparation the polylactide is regranulated with an addition of a plasticizer in the form of bis(2-ethylhexyl) succinate in an amount of 5 - 25% by weight in relation to the polylactide, the regranulation is carried out at a temperature range of 170 - 200°C and an extruder screw speed of 50-120 rpm, followed by extrusion of the regranulate into film at a temperature range of 170 - 210°C and an extruder screw speed of 30-80 rpm.

## Description

The object of the invention is a method for obtaining a biodegradable film made of biodegradable polylactide with the addition of a plasticiser.

Films derived from unmodified polylactide (PLA) are characterised by high brittleness, low elasticity and, therefore, a high susceptibility to mechanical damage to the films themselves and the end products formed from them. These characteristics also make it difficult or impossible to process polylactide by extrusion blow moulding.

From the state of the art, it is known that the most commonly used plasticisers for polylactide are: polyethylene glycols, citric acid esters (e.g. tributyl citrate). Polylactide can also be plasticised by obtaining blends with other polyesters (e.g: PBAT - polybutylene adipate-co-terephthalate, PCL - polycaprolactone) or carry out graft copolymerisation.

From the description of the international application WO2011082052 (A1), a composition comprising a polylactide resin and a plasticiser is known. The plasticiser has a chemical formula in which the substituent R may be the same or may be different and in which at least one substituent R is a branched alkyl containing a carbon chain of length C5 or greater; R is an H or an acyl group. The essence of the invention is also a method for obtaining a semi-crystalline polylactide film; it comprises a step for obtaining a polylactide composition containing a polylactide resin, a nucleating agent and the aforementioned plasticiser. The composition is extruded as a molten sheet, which is then cooled to crystallise the polylactide and produce a film.

Plasticisation of polylactide enabling its extrusion into a film requires not only the appropriate selection of the modifying agent, but also its concentration in the polyester matrix, as well as appropriate processing conditions.

The aim of the invention was to obtain a film made of biodegradable polylactide, which would be characterised by increased flexibility and increased durability. The aim was also to provide an efficient way of obtaining thin films from biodegradable polylactide by extrusion.

The essence of the invention is a method for obtaining a biodegradable film based on the biodegradable polymer polylactide (PLA) with a plasticiser, **characterised in that** in the first stage of preparation the polylactide is regranulated with the addition of a plasticiser in the form of bis(2-ethylhexyl) succinate in an amount of 5 - 25 % by weight in relation to the polylactide, the regranulation is carried out at a temperature range of 170 - 200°C and an extruder screw speed of 50-120 rpm, followed by extrusion of the regranulate into film at a temperature range of 170 - 210°C and an extruder screw speed of 30-80 rpm.

The biodegradable polyester used has an MFI melt flow index of 1-9 g/10min (210/1.16kg).

The regranulate is converted into a film by cast extrusion in a twin-screw extruder at a temperature of 170-210°C and an extruder screw speed of 35-60 rpm.

The regranulate is converted into a film by extrusion blow moulding at a temperature of 170-195°C and an extruder screw speed of 30-80 rpm.

The process of regranulation of the polylactide in the presence of an ester-based plasticiser made it possible to obtain thin, flexible polylactide film by thermoplastic cast extrusion (CAST method) or extrusion blow moulding.

Moreover, the addition of a plasticiser in the form of bis(2-ethylhexyl) succinate facilitated the processing of the polylactide - this made it possible to lower the regranulation temperature and thus reduce energy consumption and the degree of degradation. With a lower processing temperature, it would be possible to introduce additives with lower thermal stability. This means that the criterion for selecting potential additives in terms of processing temperature is increasing.

With the appropriately selected modifying agent bis(2-ethylhexyl) succinate, no phase separation and no reduction in melt strength were observed during the first stage of the method according to the invention, i.e. regranulation, which in turn allowed further processing of the PLA regranulate/plasticiser to form films by both CAST-type extrusion and extrusion blow moulding. By the method according to the invention, a thin film with a thickness in the range of 70 to 200 microns can be obtained, used for example for packaging purposes.

### Example 1

After drying - according to the raw material data sheet - the polylactide pellets were extruded in a co-rotating twin-screw extruder (LID = 40, d = 20 mm) equipped with ten heating zones in the plasticisation zone in the presence of plasticiser: bis(2-ethylhexyl) succinate at 15 wt.% relative to the amount of polylactide. The polymer was fed in the first zone using a single-screw feeder at a rate of 19 g/min. The plasticiser was fed continuously into the sixth heating zone of the extruder feed using a diaphragm pump. Plasticiser-wetted pellets were extruded at a temperature profile of 180°C in zones 2-9, in zone 1: 170°C, in zone 10: 185°C at an auger speed of 120 rpm. The plasticised polymer was extruded through a 4-hole nozzle in the form of threads, cooled in an air stream in a cooling tunnel and finally granulated using a cutter granulator. The resulting regranulate was extruded as a balloon/sleeve film on a blow moulding system on a single-screw extruder with L/D = 30, d = 20 mm equipped with 3 heating zones and connected to a circular head. Blowing was conducted at an extruder profile of 180°C and a screw speed of 40 rpm. The resulting film, in the form of a folded double web, was wound onto a cardboard sleeve with a diameter approximately 10-20% larger than the diameter of the film winding formed.

### Example 2:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 10 wt.% relative to the amount of polylactide. The polymer was fed in the first zone using a single-screw feeder at a rate of 14 g/min. The plasticiser was fed continuously into the feed zone of the extruder using a diaphragm pump. Plasticiser-wetted pellets were extruded at a temperature profile of 175°C in zones 2-9, in zone 1: 165°C, in zone 10: 170°C at an auger speed of 60 rpm. The plasticised polymer was extruded through a 4-hole nozzle in the form of threads, cooled in an air stream in a cooling tunnel and finally granulated using a cutter granulator. The resulting regranulate was extruded as a balloon/sleeve film on a blow moulding system on a single-screw extruder with L/D = 30, d = 20 mm equipped with three heating zones and connected to a circular head. Blowing was conducted at an extruder profile of 175°C and a screw speed of 30 rpm. The resulting film, in the form of a folded double web, was wound onto a cardboard sleeve with a diameter approximately 10-20% larger than the diameter of the film winding formed.

### Example 3:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 25 wt.% relative to the amount of polylactide. The polymer was fed in the first zone using a single-screw feeder at a rate of 18.2 g/min. The plasticiser was fed continuously into the feed zone of the extruder using a diaphragm pump. Plasticiser-wetted pellets were extruded at a temperature profile of 170°C in zones 2-9, in zone 1: 160°C, in zone 10: 170°C at an auger speed of 50 rpm. The plasticised polymer was extruded through a 4-hole nozzle in the form of threads, cooled in an air stream in a cooling tunnel and finally granulated using a cutter granulator. The resulting regranulate was extruded as a balloon/sleeve film on a blow moulding system on a single-screw extruder with L/D = 30, d = 20 mm equipped with three heating zones and connected to a circular head. Blowing was conducted at an extruder profile of 170°C and a screw speed of 45 rpm. The resulting film, in the form of a folded double web, was wound onto a cardboard sleeve with a diameter approximately 10-20% larger than the diameter of the film winding formed.

### Example 4:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 5 wt.% relative to the amount of polylactide. The polymer was fed in the first zone using a single-screw feeder at a rate of 22 g/min. The plasticiser was fed continuously into the feed zone of the extruder using a diaphragm pump. Plasticiser-wetted pellets were extruded at a temperature profile of 175°C in zones 2-9, in zone 1: 185°C, in zone 10: 190°C at an auger speed of 120 rpm. The plasticised polymer was extruded through a 4-hole nozzle in the form of threads, cooled in an air stream in a cooling tunnel and finally granulated using a cutter granulator.

The resulting regranulate was extruded as a balloon/sleeve film on a blow moulding system on a single-screw extruder with L/D = 30, d = 20 mm equipped with three heating zones and connected to a circular head. Blowing was conducted at an extruder profile of 195°C and a screw speed of 80 rpm.

The resulting film, in the form of a folded double web, was wound onto a cardboard sleeve with a diameter approximately 10-20% larger than the diameter of the film winding formed.

### Example 5:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 20 wt.% relative to the amount of polylactide. The polymer was fed in the first zone using a single-screw feeder at a rate of 18 g/min. The plasticiser was fed continuously into the feed zone of the extruder using a diaphragm pump. Plasticiser-wetted pellets were extruded at a temperature profile of 175°C in zones 2-9, in zone 1: 175°C, in zone 10: 180°C at an auger speed of 100 rpm. The plasticised polymer was extruded through a 4-hole nozzle in the form of threads, cooled in an air stream in a cooling tunnel and finally granulated using a cutter granulator. The resulting regranulate was extruded as a balloon/sleeve film on a blow moulding system on a single-screw extruder with L/D = 30, d = 20 mm equipped with three heating zones and connected to a circular head. Blowing was conducted at an extruder profile of 180°C and a screw speed of 60 rpm. The resulting film, in the form of a folded double web, was wound onto a cardboard sleeve with a diameter approximately 10-20% larger than the diameter of the film winding formed.

### Example 6:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 7 wt.% relative to the amount of polylactide. The polymer was fed in the first zone using a single-screw feeder at a rate of 20 g/min. The plasticiser was fed continuously into the feed zone of the extruder using a diaphragm pump. Plasticiser-wetted pellets were extruded at a temperature profile of 190°C in zones 2-9, in zone 1: 185°C, in zone 10: 190°C at an auger speed of 80 rpm. The plasticised polymer was extruded through a 4-hole nozzle in the form of threads, cooled in an air stream in a cooling tunnel and finally granulated using a cutter granulator. The resulting regranulate was extruded on a single-screw extruder equipped with a flat head (CAST extrusion) with a diameter of 200 mm. Extrusion was carried out at an extruder temperature profile of 180°C and a screw speed of 60 rpm. The resulting film in web form was wound onto a cardboard sleeve with a diameter approximately 10-20% larger than the diameter of the film winding created.

### Example 7:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 15 wt.% relative to the amount of polylactide. The polymer was fed in the first zone using a single-screw feeder at a rate of 16.5 g/min. The plasticiser was fed continuously into the feed zone of the extruder using a diaphragm pump. Plasticiser-wetted pellets were extruded at a temperature profile of 190°C in zones 2-9, in zone 1: 185°C, in zone 10: 180°C at an auger speed of 80 rpm. The plasticised polymer was extruded through a 4-hole nozzle in the form of threads, cooled in an air stream in a cooling tunnel and finally granulated using a cutter granulator. The resulting regranulate was extruded on a single-screw extruder equipped with a flat head (CAST extrusion) with a diameter of 200 mm. Extrusion was carried out at an extruder temperature profile of 180 °C and a screw speed of 50 rpm. The resulting film in web form was wound onto a cardboard sleeve with a diameter approximately 10-20% larger than the diameter of the film winding created.

### Example 8:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 10 wt.% relative to the amount of polylactide. The polymer was fed in the first zone using a single-screw feeder at a rate of 20 g/min. The plasticiser was fed continuously into the feed zone of the extruder using a diaphragm pump. Plasticiser-wetted pellets were extruded at a temperature profile of 190°C in zones 2-9, in zone 1: 200°C, in zone 10: 195°C at an auger speed of 60 rpm. The plasticised polymer was extruded through a 4-hole nozzle in the form of threads, cooled in an air stream in a cooling tunnel and finally granulated using a cutter granulator. The resulting regranulate was extruded on a single-screw extruder equipped with a flat head (CAST extrusion) with a diameter of 200 mm. Extrusion was carried out at an extruder temperature profile of 185 °C and a screw speed of 35 rpm. The resulting film in web form was wound onto a cardboard sleeve with a diameter approximately 10-20% larger than the diameter of the film winding created.

### Example 9:

After drying - according to the raw material data sheet - the polylactide pellets were extruded in a co-rotating twin-screw extruder (LID = 40, d = 20 mm equipped with ten heating zones in the plasticisation zone) in the presence of plasticiser: bis(2-ethylhexyl) succinate at 5 wt.% in the twin-screw extruder. The polymer was fed in the first zone using a single-screw feeder at a rate of 15.5 g/min. The plasticiser was fed continuously into the feed zone of the extruder using a diaphragm pump. Plasticiser-wetted pellets were extruded at a temperature profile of 210°C in zones 2-9, in zone 1: 200°C, in zone 10: 205°C at an auger speed of 80 rpm. The plasticised polymer was extruded through a 4-hole nozzle in the form of threads, cooled in an air stream in a cooling tunnel and finally granulated using a cutter granulator. The resulting regranulate was extruded on a single-screw extruder equipped with a flat head (CAST extrusion) with a diameter of 200 mm. Extrusion was carried out at an extruder temperature profile of 175°C and a screw speed of 25 rpm. The resulting film in web form was wound onto a cardboard sleeve with a diameter approximately 10-20% larger than the diameter of the film winding created.

The films obtained by the method according to the invention were subjected to mechanical tests in tensile strength and puncture tests. The tests were carried out using a Zwick//Roell Z2.5 testing machine (Ulm, Germany) and appropriate measuring attachments in accordance with the applicable standards:
- elongation at break tests according to ASTM D822-02
- maximum force during the puncture test according to ASTM F1306

The results obtained (Table 1) confirmed that the films obtained (with a thickness of 80 - 85 µm), using the method according to the invention, have a significantly higher elongation at break than unmodified films in the range of 3x to 32x with comparable or slightly lower puncture force in the nominal value range of 38-64 N.

**Table 1. Mechanical properties of films obtained by thermoplastic casting with thicknesses in the range 80-85 microns.**

| Name | Elongation at break [%] | Puncture force [N] |
|---|---|---|
| Example 6 | 420 | 49.2 |
| Example 7 | 1235 | 38.6 |
| Example 8 | 1105 | 64.3 |
| Example 9 | 144 | 48.7 |
| PLA without plasticiser | 38 | 60.2 |

## Claims

1. A method to produce a biodegradable film based on a biodegradable polymer of polylactide (PLA) with a plasticizer, **characterised in that** in the first stage of preparation the polylactide is regranulated with an addition of a plasticizer in the form of bis(2-ethylhexyl) succinate in an amount of 5 - 25% by weight in relation to the polylactide, the regranulation is carried out at a temperature range of 170 - 200°C and an extruder screw speed of 50-120 rpm, followed by extrusion of the regranulate into film at a temperature range of 170 - 210°C and an extruder screw speed of 30-80 rpm.

2. Method according to claim 1 **characterised in that** the biodegradable polyester used has an MFI melt flow index in the range 1-9 g/10min (210/1.16kg).

3. Method according to claim 1, **characterised in that** the regranulate is converted into a film by cast extrusion in a twin-screw extruder at a temperature of 170-210°C and an extruder screw speed of 35-60 rpm.

4. Method according to claim 1, **characterised in that** the regranulate is converted into a film form by extrusion blow moulding at a temperature of 170-195°C and an extruder screw speed of 30-80 rpm.
